# FASCICULE DE BREVET EUROPEEN

(11) **EP 4 304 934 B1**
(45) Date de publication et mention de la délivrance du brevet: **23.07.2025**
(21) Numéro de dépôt: 22711270.3
(22) Date de dépôt: 01.03.2022
(51) Int. Cl.: C25D 5/36, C25D 5/48, C25D 5/50, C25D 3/56, C22C 18/00, B64C 25/60

(54) **ATTERRISSEUR COMPORTANT DES POINTS D'ETANCHEITE STATIQUE**
FAHRWERK MIT STATISCHEN VERSIEGELUNGSPUNKTEN
LANDING GEAR COMPRISING STATIC SEALING POINTS

(30) Priorité: 10.03.2021 FR 2102347
(43) Date de publication de la demande: 17.01.2024
(73) Titulaire: Safran Landing Systems, 78140 Vélizy-Villacoublay (FR)
(72) Inventeur: FLEGNY, Anaïs, 77550 MOISSY-CRAMAYEL (FR); MIERZEJEWSKI, Sacha, 77550 MOISSY-CRAMAYEL (FR); MATHON, Nicolas, 77550 MOISSY-CRAMAYEL (FR)
(74) Mandataire: Cabinet Beau de Loménie
(86) Numéro de dépôt international: PCT/FR2022/050364
(87) Numéro de publication internationale: WO 2022/189728

(56) Documents cités:
- EP-A1- 2 354 277
- EP-A1- 3 112 262
- EP-A1- 3 112 263
- EP-A1- 3 192 737
- EP-A1- 3 670 337
- WO-A1-2014/125045
- US-A1- 2007 164 151

## Description

### Domaine Technique

L'invention concerne le domaine des atterrisseurs pour aéronefs et plus précisément les matériaux de ces derniers ainsi que leurs procédés d'obtention.

### Technique antérieure

Un atterrisseur pour aéronef est un organe comportant une roue, et permettant de supporter l'aéronef durant des phases de roulage, de décollage ou d'atterrissage. Un tel atterrisseur comprend généralement une tige devant être suffisamment rigide pour soutenir l'aéronef, et est généralement muni d'un système d'amortissement permettant à l'atterrisseur d'accommoder les contraintes mécaniques qui s'exercent sur la roue lors des étapes de décollage et d'atterrissage.

Les systèmes d'amortissement existants comprennent généralement un piston qui évolue dans une chambre remplie d'un fluide visqueux. Le piston se trouve ainsi freiné dans son évolution et amorti donc l'atterrisseur auquel il est connecté.

Des exemples d'atterrisseurs de l'art antérieur sont décrits dans les documents US2007/164151 A1, EP3112263 A1 et EP3112262 A1.

Afin d'éviter toute perte de fluide et pour garantir un bon fonctionnement des systèmes d'amortissement, il est nécessaire de garantir l'étanchéité des systèmes d'amortissement et c'est pourquoi les systèmes d'amortissement possèdent des points d'étanchéité statique.

Actuellement, ces points d'étanchéité statique comprennent des substrats revêtus de chrome ou de nickel prenant en sandwich des joints en matériau élastiquement déformable. Toutefois, les revêtements actuellement considérés ne présentent pas des caractéristiques suffisantes pour d'autres aspects indispensables à des pièces d'atterrisseur, entre autre une bonne résistance à la corrosion, et c'est pourquoi les points d'étanchéité statique sont aujourd'hui composés de plusieurs revêtements superposés pour pouvoir garantir un ensemble de performance satisfaisant. Il en résulte une préparation complexe des pièces d'atterrisseur. Par ailleurs, les revêtements au chrome sont concernés par des évolutions législatives qui imposent leur remplacement dans les années à venir, car l'utilisation du chrome présente des dangers vis-à-vis de l'environnement et de l'homme.

Il existe donc un besoin pour le développement de nouveaux matériaux convenant aux points d'étanchéité statique des atterrisseurs qui seraient dénués des désavantages des matériaux actuellement utilisés.

### Exposé de l'invention

Afin de répondre à ce besoin, les inventeurs proposent un atterrisseur selon la revendication 1.

Les inventeurs ont constaté que des points d'étanchéité en acier avec des revêtements en alliage de zinc et de nickel ayant une rugosité de surface Ra telle qu'indiquée ci-dessus, permet l'obtention de points d'étanchéité statique assurant des caractéristiques d'étanchéité statique au moins identiques, sinon supérieures aux points d'étanchéité statique de l'art antérieur. De plus, les matériaux utilisés sont dénués des désavantages liés à l'utilisation des matériaux des joints d'étanchéité statiques de l'art antérieur, et sont en particulier plus respectueux de l'environnement.

Il est entendu que la rugosité Ra de la surface d'une pièce doit être entendue comme la rugosité moyenne de la surface au sens de la norme ISO 4288. Par exemple, cette rugosité peut être mesurée par la méthode du stylet. Dans cette méthode la rugosité d'une surface est déterminée par le déplacement d'une pointe de palpeur à une vitesse constante sur la surface d'une pièce.

Par ailleurs, les inventeurs ont constaté, qu'en plus de permettre le remplacement des revêtements de l'art antérieur, au chrome ou au nickel, les revêtements de l'invention en alliage de zinc et de nickel permettent d'assurer d'autres caractéristiques essentielles pour les pièces d'atterrisseurs. En particulier, les revêtements en alliage de zinc et de nickel assurent des propriétés anti-corrosion comparables sinon supérieures à celles des revêtements de l'art antérieur.

La teneur en nickel comprise entre 12 et 18 % assure que l'alliage soit dans la phase gamma ce qui assure que le revêtement ait les propriétés souhaitées. De plus, cette phase cristallographique du revêtement permet d'assurer en plus de la faible rugosité obtenue, de bonnes propriétés anti-corrosion.

Ainsi, en plus d'assurer une bonne étanchéité statique au point d'étanchéité statique, les revêtements en alliages de zinc et de nickel permettent d'utiliser plus largement dans l'atterrisseur une seule composition de revêtement pour plusieurs fonctions et ainsi de simplifier grandement les procédés de fabrication des atterrisseurs. Il est entendu que l'étanchéité « statique » s'entend comme l'étanchéité entre deux pièces non mobiles l'une par rapport à l'autre.

En particulier, l'étanchéité statique du au moins un point d'étanchéité statique est entendu comme une étanchéité statique aux gaz et une étanchéité statique aux fluides hydrauliques.

Dans un mode de réalisation, le revêtement en alliage de zinc et de nickel a une épaisseur comprise entre 10 et 30 µm.

Dans un mode de réalisation, le revêtement en alliage de zinc et de nickel comprend en pourcentage massique de l'alliage entre 12 % et 16 % de nickel, au plus 0,5 % d'autres éléments que le nickel, le reste étant du zinc.

Dans un mode de réalisation, le joint en matériau élastiquement déformable est composé d'un ou plusieurs matériaux choisis parmi : le poybutadiène, le polyéthylène chloré, le chloroprène, le polyéthlène chlorosufloné, les fluorocabones, les fluorosilicones, les nitriles hydrogénées, les polyacrylates, les perfluoroélastomères, les polyacrylates, les polyuréthane, le silicone et ses dérivés, ou encore parmi les copolymères nitrile-butadiène, éthylène-propylène, éthylène-acrylate, d'isobutylène et d'isoprène, styrène-butadiène, de tétrafluoroéthylène et de propylène.

De plus, la forme du joint n'est pas déterminante pour l'obtention de l'effet décrit ci-dessus. Le joint peut ainsi être choisi parmi les formes de joints nécessaire à la bonne réalisation de l'invention. En particulier, le joint peut être rond, torique, en « T », de section carrée ou encore de section hexagonale.

Dans un mode de réalisation, la zone d'étanchéité statique peut comprendre en outre une ou plusieurs bagues en un matériau plus rigide, disposée autour du joint, et s'étendant entre la première et la deuxième surface.

De telles bagues permettent de protéger le matériau élastiquement déformable lorsque la zone d'étanchéité est soumise à de fortes différences de pression. Par exemple, ces bagues peuvent être en polyéthylène téréphtalate, en nylon ou encore en polyétheréthercétone. De telles bagues peuvent également assurer que même lorsque la zone d'étanchéité statique est soumise à de fortes différences de pression, le joint en matériau élastiquement déformation ne s'étire pas dans les interstices qui pourraient exister entre la première et la deuxième surface.

Dans un mode de réalisation, une au moins des surfaces des premières et deuxièmes pièces peut comprendre une couche organo-minérale sur le revêtement en alliage de zinc et de nickel et au contact de ce dernier.

Une telle couche organo-minérale permet d'assurer une rugosité de la surface de la pièce encore plus faible que celle obtenue en l'absence de la couche organo-minérale. Toutefois, une telle couche n'est pas nécessaire pour l'obtention des caractéristiques d'étanchéité statique souhaitées, pourvu que la rugosité Ra moyenne de la surface de la pièce du revêtement en alliage de nickel et de zinc soit inférieure ou égale à 1,6 µm.

Dans un mode de réalisation, une seule des surfaces des premières ou deuxièmes pièces de l'atterrisseur comprend une couche organo-minérale.

Dans un mode de réalisation, les surfaces des premières ou deuxièmes pièces de l'atterrisseur comprennent une couche organo-minérale.

Dans un mode de réalisation, aucune des surfaces des premières ou deuxièmes pièces de l'atterrisseur comprend une couche organo-minérale.

Il est entendu qu'une couche organo-minérale comprend une partie organique et/ou une partie minérale.

Dans un mode de réalisation, la couche organo-minérale peut être choisie parmi une couche organo-minérale à base silicone ou une couche organo-minérale riche en aluminium.

Le cas échéant, la partie organique et la partie minérale forment une couche unique, c'est-à-dire que les deux parties sont mélangées au sein d'une même couche et ne se présentent pas sous l'aspect de deux couches distinctes.

Dans un mode de réalisation, la couche organo-minérale peut comprendre une partie organique comprenant des alcools éthoxylés et une partie inorganique comprenant un acide silicique.

Dans d'autres modes de réalisation, la couche organo-minérale peut être une résine époxy.

D'autres natures de couches organo-minérales peuvent également fonctionner pourvu qu'elles permettent d'obtenir l'effet souhaité, à savoir de diminuer encore davantage la rugosité de surface de la première ou deuxième pièce.

La couche organo-minérale peut intégrer ou non un lubrifiant.

Pour faciliter son application, la couche organo-minérale peut être choisie parmi des agents solubles dans l'eau ou encore, elle peut être utilisée diluée dans un solvant.

Dans un mode de réalisation préféré, la couche organo-minérale est choisie soluble dans l'eau, et comprend un composant inorganique et organique et avec lubrifiant intégré.

Dans un mode de réalisation, le substrat en acier des premières et deuxièmes pièces de l'atterrisseur peut être en un acier choisi parmi les aciers suivants : 35NCD16, 35CD4, 35NC6, S99, S154, 25CD4S, Z8CND17-04, Z6CNU17-04, Z15CN17-03, S143, S144, S145, Z2CN18-10, Z2CN18-10/Z3CN18-10, Z10CNT18-10, Z12CNT18-10, XES, XC18S, 17-4PH, X2CrNi 18-9, 304L, Z6CNT18, 17-7PH, DC04 ou C22E/R.

Selon un autre de ses aspects, qui n'est pas couvert par les revendications, l'invention concerne également un procédé d'obtention d'une pièce comprenant un substrat en acier revêtu par un revêtement en alliage de zinc et de nickel, comportant en pourcentage massique de l'alliage entre 12 % et 18 % et nickel, au plus 0,5 % d'autres éléments que le nickel et le zinc, le reste étant du zinc, dont la surface présente une rugosité Ra moyenne inférieure ou égale à 1,6 µm comprenant au moins les étapes suivantes :
- une étape de dégraissage du substrat ;
- une étape de préparation du substrat ;
- une étape de dépôt électrolytique du revêtement par trempage du substrat dans un bain alcalin comprenant un sulfate de nickel et un zincate.

Le procédé d'obtention décrit ci-dessus permet d'obtenir des pièces en acier revêtues convenant comme première et/ou deuxième pièce d'atterrisseur pour la réalisation de points d'étanchéité statique tels que décrits ci-dessus. En particulier, il permet d'obtenir des revêtements en alliage de zinc et de nickel ayant des rugosités Ra de surface moyenne inférieure ou égale à 1,6 µm.

Dans un mode de réalisation, l'étape de préparation du substrat peut comprendre une étape de sablage.

Dans un autre mode de réalisation, l'étape de préparation du substrat peut comprendre une étape d'attaque chimique.

Par exemple, l'attaque chimique peut être réalisée à l'aide d'une solution aqueuse d'acide chlorhydrique à 3%.

Une étape de préparation comprenant une attaque chimique est particulièrement préférée car elle permet d'obtenir, dès la fin de l'attaque chimique une rugosité très faible, qui facilitera l'obtention d'une faible rugosité après l'étape de dépôt électrolytique.

Dans un mode de réalisation, le procédé peut comprendre en outre, après l'étape de dépôt électrolytique, une ou plusieurs étapes de finition.

Par exemple, dans un mode de réalisation, l'étape de finition est une étape de polissage mécanique.

Cette étape permet d'abaisser encore davantage la rugosité de surface obtenue pour le revêtement en alliage de zinc et de nickel à la fin du procédé de préparation.

Dans ce mode de réalisation, le procédé peut comprendre en outre une étape de passivation après l'étape de polissage mécanique.

Une telle étape de passivation permet d'améliorer les propriétés de résistance à la corrosion de l'alliage, sans nuire d'aucune manière à la faible rugosité obtenue après la reprise mécanique.

Dans un mode de réalisation, le procédé comprend en outre, après l'étape de dépôt électrolytique, une étape d'application sur le revêtement en alliage de zinc et de nickel d'une composition organo-minérale.

Par exemple, une telle composition organo-minérale peut comprendre un mélange d'acide silicique, de sel de lithium, d'alcool éthoxylé avec 16 à 18 atomes de carbone et d'ammoniaque.

L'application d'une composition organo-minérale permet de diminuer encore la rugosité de la surface, notamment lorsque la rugosité de surface n'est pas aussi basse que souhaitée après l'étape de dépôt électrolytique.

### Brève description des dessins

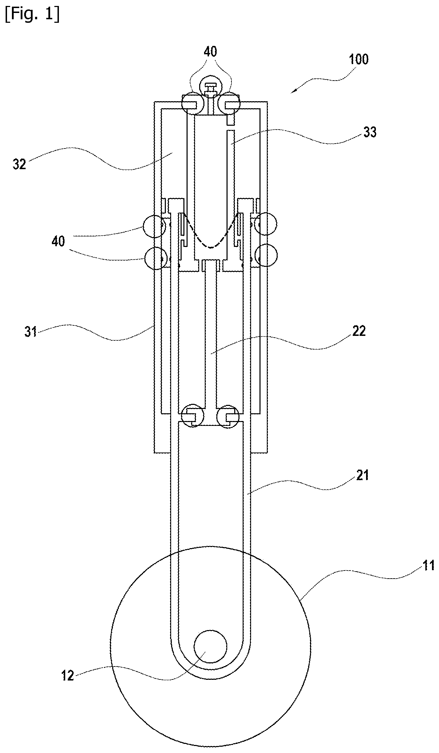

[Fig. 1] La figure 1 représente de manière schématique un atterrisseur dans un mode de réalisation de l'invention.

### Description des modes de réalisation

L'invention est à présent décrite au moyen de modes de réalisation particuliers et d'exemples, qui sont décrits à des fins illustratives, et ne doivent pas être interprétés comme limitant l'invention.

Comme décrit ci-dessus l'invention concerne un atterrisseur comprenant :
- une tige d'atterrisseur s'étendant selon un axe principal ;
- au moins un essieu relié mécaniquement à la tige d'atterrisseur ;
- au moins une roue montée pour pouvoir être mise en rotation autour dudit essieu ;
- au moins un amortisseur disposé pour amortir un mouvement de coulissement de ladite tige par rapport à une structure de l'aéronef,
l'atterrisseur étant caractérisé en ce qu'il comprend en outre au moins un point d'étanchéité statique tel que décrit ci-dessus.

De manière classique, l'atterrisseur peut comprendre une pluralité de points d'étanchéité statique, permettant d'assurer un bon fonctionnement de l'amortisseur.

Comme indiqué plus haut, les points d'étanchéité statique comprennent un joint en matériau élastiquement déformable maintenu entre une portion d'une première pièce de l'atterrisseur et une portion d'une deuxième pièce de l'atterrisseur les première et deuxième pièces comprenant un substrat en acier revêtu par un revêtement en alliage de zinc et de nickel, comportant en pourcentage massique de l'alliage entre 12 % et 18 % et nickel, au plus 0,5 % d'autres éléments que le nickel et le zinc, le reste étant du zinc, et la rugosité Ra de la surface des portions des première et deuxième pièce de l'atterrisseur étant inférieure ou égale à 1,6 µm.

Dans un mode de réalisation, le revêtement en alliage de zinc et de nickel peut recouvrir une partie plus large de la première et/ou de la deuxième pièce de l'atterrisseur que le seul point d'étanchéité statique.

Par exemple, le revêtement d'alliage peut recouvrir toute la première et/ou la deuxième pièce de l'atterrisseur, afin de profiter également des propriétés de résistance à la corrosion améliorée conférée par le revêtement en alliage de zinc et de nickel tel que décrit ci-dessus.

Ainsi, la préparation d'un atterrisseur est simplifiée par rapport à la préparation d'un atterrisseur de l'art antérieur, car il n'est plus nécessaire de distinguer les revêtements à appliquer pour obtenir un point d'étanchéité statique et pour obtenir une pièce ayant une bonne résistance à la corrosion.

Il est fait référence à la figure 1 qui décrit un atterrisseur dans un mode de réalisation de l'invention vu en coupe.

Dans ce mode de réalisation, l'atterrisseur 100 comprend une roue 11 montée sur un essieu 12.

L'essieu 12 est porté à l'intérieur d'une tige 21 en forme de U, chacune des branches de la tige 21 s'étendant dans une chambre 32 formée par la paroi extérieure 31 de l'atterrisseur. Les deux bras de la tige 21 s'étendent dans la chambre 32 et parallèlement à la paroi extérieure 31. Les branches de la tige 21 sont en outre solidaires d'une patte 22 qui s'étend parallèlement aux bras de la tige 21 au centre de la chambre 32.

Les deux branches de la tige 21 et la patte 22 sont libres de se déplacer dans une seule direction, la direction verticale dans le mode représenté.

Ainsi, un mouvement de l'essieu 12 occasionne un déplacement des deux branches de la tige 21 et de la patte 22 relativement à la paroi extérieure 31.

Selon le principe d'un amortisseur classique, la chambre 32 de l'atterrisseur 100 peut être remplie d'un liquide, dont la viscosité est choisie pour amortir les mouvements des bras de la tige 21 ou la patte 22 de sorte que l'essieu et la roue qu'il porte voient leurs mouvements amortis.

Dans le mode de réalisation représenté, la patte 22 s'engage dans une partie interne de la chambre 32 délimitée par une paroi interne 33. La partie interne délimitée par la paroi interne 33 est toutefois en communication fluidique avec le reste de la chambre 32.

L'atterrisseur comprend en outre un ou plusieurs point(s) d'étanchéité statique 40, repérées également par des cercles sur la figure.

Ces zones d'étanchéités permettent d'assurer que le contenu de la chambre 32 ne soit pas en contact avec l'extérieur.

Comme décrit plus haut, on propose également un procédé d'obtention d'une pièce comprenant un substrat en acier revêtu par un revêtement en alliage de zinc et de nickel comportant en pourcentage massique de l'alliage entre 12 % et 18 % et nickel, au plus 0,5 % d'autres éléments que le nickel et le zinc, le reste étant du zinc, dont la surface présente une rugosité Ra inférieure ou égale à 1,6 µm. En particulier, ce procédé permet d'obtenir des premières et/ou deuxièmes pièces pour des zones d'étanchéité statique telles que décrites ci-dessus.

Le procédé comprend une première étape de dégraissage du substrat. Cette étape est présente afin d'ôter les éventuels contaminants de la surface. En particulier, une telle étape peut éliminer des traces d'huile, de graisse et/ou de corps étranger qui pourraient résulter de la préparation du substrat. Par exemple, l'étape de dégraissage peut être réalisée avec une formulation comprenant du métalisilicate de sodium, de l'acide diphosphorique, de l'alkyl alcool éthoxylé, et des amines. Une telle formulation est, par exemple, disponible dans le commerce sous la dénomination Turco C-AK Aviation.

Le procédé comprend également une seconde étape de décapage du substrat. Cette étape vise à activer la surface du substrat, et d'augmenter ainsi sa réactivité afin de favoriser la déposition du revêtement en alliage de zinc et de nickel.

Dans un mode de réalisation cette étape peut être une étape mécanique. Par exemple, l'étape de décapage du substrat peut être une étape de sablage mécanique.

Dans un autre mode de réalisation, l'étape de décapage peut être une étape chimique. Par exemple, l'étape de décapage peut être réalisée par trempage d'une pièce de substrat obtenue après l'étape de dégraissage dans une solution d'acide chlorhydrique à 175 g/L comprenant 5 % d'un additif par exemple disponible sous la dénomination commerciale Picklane 50. Le trempage peut avoir lieu pendant 5 minutes à 20°C.

La troisième étape du procédé est l'étape de formation du revêtement en alliage de zinc et de nickel à la surface du substrat décapé, obtenu à l'issue de la deuxième étape, par trempage dans un bain électrolytique.

La pièce de substrat peut être plongée dans un bain alcalin contenant un sulfate de nickel et un zincate.

Un potentiel électrique est appliqué entre la pièce de substrat et une électrode plongée dans le bain électrolytique.

Par exemple, le bain alcalin peut être obtenu en versant dans le bain une solution d'hydroxyde de sodium et/ou de l'hydroxyde de potassium, du nickel sous forme de sulfate de nickel, du zinc sous forme de zincate et des agents complexant nécessaires à la complexation du zinc et du nickel comme des amines telles que du diéthylène triamine et des additifs organiques comme des brillanteurs ou des agents nivelant.

Si nécessaire en fonction de la géométrie de la première pièce, d'autres anodes peuvent être utilisées pour constituer des outils rapportés en vis-à-vis de zones de la première pièce difficiles d'accès. Pour limiter des surépaisseurs locales, il est aussi possible de disposer, des caches et/ou voleurs de courant en vis-à-vis de portions de la première pièce. Cet outillage constitué des anodes, caches et voleurs de courant permet d'avoir une épaisseur homogène au cours du dépôt.

Le temps de réalisation du dépôt et la densité de courant imposée entre les anodes et la première pièce plongé dans le bain définissent l'épaisseur finale de la couche zinc-nickel obtenue. Ces outillages et paramètres de temps et de densité de courant sont ajustés pour obtenir une épaisseur de couche finale prédéterminée.

Une étape facultative de passivation peut être réalisée à l'issue du traitement d'électrolyse. Une telle étape permet d'augmenter la résistance à la corrosion conférée par le revêtement de zinc et de nickel.

Une telle étape peut être réalisée par immersion dans un bain à température ambiante. Par exemple, l'immersion peut être réalisée pendant 60 secondes.

Comme indiqué plus haut, le revêtement en alliage de zinc et de nickel tel que proposé permet également de conférer au substrat de bonnes propriétés de résistance à la corrosion. Lorsque de telles propriétés de résistance à la corrosion sont nécessaires, et puisque cela ne nuit pas à la rugosité de surface, il est avantageux de réaliser un traitement de passivation sur l'ensemble de la première et/ou de la deuxième pièce. Cela permettra, avec un seul revêtement, de conférer à la fois les propriétés souhaitées de résistance à la corrosion et d'étanchéité statique. Le revêtement est de plus davantage respectueux de l'environnement que les revêtements au chrome et/ou au nickel actuellement proposés pour ces deux applications. Enfin, l'obtention d'un unique revêtement avec les deux propriétés permet de faciliter la préparation des pièces d'atterrisseur.

Dans un mode de réalisation, le procédé peut en outre comprendre une étape de dégazage de l'hydrogène occlus dans l'acier. Par exemple, une telle étape peut être réalisée par chauffage de la pièce revêtue pendant au moins 12 heures dans un four à une température comprise entre 176 °C et 204 °C. Une telle étape permet d'évacuer l'hydrogène éventuellement formé lors de l'électrolyse. En effet, la pièce est généralement placée à la cathode lors de cette étape, et il est possible que de l'hydrogène gazeux soit libéré à la cathode et diffuse dans le matériau. Cette étape permet donc l'évacuation de cet hydrogène, et diminue ainsi la fragilité de la pièce finale.

Comme décrit plus haut, il est possible à l'issue de ce traitement de procédé de diminuer encore davantage la rugosité moyenne du revêtement de surface au moyen d'une étape de reprise mécanique ou par application d'une couche organo-minérale.

Dans un premier mode de réalisation, le procédé comprend en outre une étape de finition par reprise mécanique. Cette étape peut être réalisée au moyen d'un polissage à l'aide d'une bande abrasive.

Dans un autre mode de réalisation, le procédé comprend en outre une étape de finition par application d'une résine organo-minérale.

Une telle étape permet, par enduction de la surface avec une résine organo-minérale de diminuer la rugosité de la surface de la pièce obtenue à l'issue du traitement électrolytique. En effet, la résine organo-minérale va se déposer dans les aspérités de la surface et former finalement un film fin dont la surface sera moins rugueuse que la surface de la pièce de substrat revêtue.

Les inventeurs ont constaté qu'une étape de finition est particulièrement avantageuse lorsque l'étape de préparation du substrat était réalisée par sablage. Il est en effet constaté que les rugosités moyennes des substrats revêtus, obtenus à l'issue de l'étape d'électrolyse sont plus basses lorsque l'étape de préparation est un décapage chimique qu'un polissage mécanique.

Toutefois, il est possible de s'affranchir de cette étape, car le revêtement obtenu à l'issue de l'étape d'électrolyse présente généralement une rugosité satisfaisante.

Quel que soit le traitement choisi, et la présence ou non d'une étape de finition.

L'invention est à présent décrite au moyen d'exemples de réalisation.

### Exemples

### Exemple 1 : test d'étanchéité sur des pions témoins.

Dans cet exemple, l'étanchéité de pions témoins représentatifs des points d'étanchéité statique est testée. Les pions témoins comprennent un joint élastomérique en éthylène-propylène, le joint étant un anneau en forme de O, maintenu entre une première pièce en acier 35NCD16 recouvert d'un revêtement en alliage de zinc et de nickel comprenant 12 à 18 % de nickel et le reste de zinc, et une deuxième pièce en substrat métallique revêtu par un alliage de zinc et de nickel comprenant 12 à 18 % de nickel et le reste de zinc.

Les surfaces des pièces sont préparées au moyen d'un procédé électrolytique similaire à celui de l'invention décrit ci-avant mais en ajustant les paramètres de réalisation de sorte que certaines pièces soient obtenues avec des rugosités moyennes conformes à l'invention et d'autres avec des rugosités supérieures.

Les pièces peuvent comprendre ou non des étapes de finition permettant d'abaisser la rugosité de leurs surfaces, notamment une étape de dépôt d'une résine organométallique, ou bien une étape de reprise mécanique.

Les protocoles des tests d'étanchéités réalisés sont les suivants :
- pour le test d'étanchéité à l'azote à 150 bars : la valve représentative de la zone d'étanchéité est vissée dans l'échantillon avec un couple compris entre 12 et 12,5 N.m. Puis l'échantillon est gonflé par un flux d'azote à une pression de 150 bars. Une seconde valve dite de fermeture de pression est fermée avec un couple de 12 à 12,5 N.m pour maintenir sous pression la zone d'étanchéité à tester.

Pour détecter une fuite, un fluide moussant est appliqué tous les jours pendant 7 jours sur le pion. Si de la mousse apparait, la pièce est déclarée non-étanche (noté NOK dans les tableaux ci-après). Au contraire, s'il n'est pas observé de mousse même après 7 jours, la pièce est déclarée étanche (noté OK dans les tableaux ci-après).
- pour le test d'étanchéité aux fluides hydrauliques à 150 bars : 1 mL de fluide phosphorescent est introduit dans le réservoir du pion d'étanchéité. Le reste du réservoir est rempli de fluide hydraulique FH51. La valve représentative de la zone d'étanchéité à tester est vissée dans l'échantillon avec un couple compris entre 12 et 12,5 N.m. L'échantillon est gonflé à l'aide de fluide hydraulique FH51 à une pression de 150 bars. Une seconde valve dite de fermeture de pression est fermée avec un couple de 12 à 12,5 N.m pour mettre sous pression la zone d'étanchéité à tester. La pièce obtenue est inspectée tous les jours pendant 21 jours sous rayonnement ultraviolet pour voir si le fluide phosphorescent s'est échappé ou non du pion d'étanchéité. Si le fluide phosphorescent apparait, la pièce est déclarée non-étanche (noté NOK dans les tableaux ci-après) tandis que si le fluide phosphorescent n'apparait pas, la pièce est déclarée étanche (noté OK dans les tableaux ci-après).

Les résultats des tests de cet exemple sont renseignés dans la table 1 ci-après.

Dans les tableaux des exemples, la mention OK indique que le test d'étanchéité est concluant, tandis que la mention NOK indique le contraire. La mention -- indique que la mesure n'a pas été effectuée. La colonne finition du zinc nickel indique si un traitement a été réalisé ou non après l'étape de dépôt électrolytique du revêtement.

**[Table 1]**

| Finition du Zinc nickel | Moyenne Ra (µm) | Test étanchéité azote 150 bars | Test étanchéité fluide hydraulique 150 bars |
|---|---|---|---|
| Aucune | 2,2 | OK | OK |
| Aucune | 3,6 | NOK | NOK |
| Finition organométallique | 1,5 | OK | OK |
| Reprise mécanique | 0,2 | OK | OK |

La table 1 montre que pour des pions témoins, l'étanchéité n'est pas fonction de la présence ou non d'une étape de finition sur le revêtement, mais qu'en revanche, lorsque la rugosité devient trop importante, l'étanchéité n'est plus assurée.

### Exemple 2 : tests d'étanchéité sur un axe

Dans cet exemple, une pièce cylindrique en acier est revêtue d'un revêtement en alliage de zinc et de nickel. Autour de cette pièce cylindrique servant de première surface sont placés deux joints élastomériques.

Les joints élastomériques sont ensuite recouverts par une deuxième pièce en acier dont la surface est revêtue d'un revêtement en alliage de zinc et de nickel et l'on a ainsi formé deux zones d'étanchéités statiques.

Les surfaces des pièces sont préparées au moyen d'un procédé électrolytique similaire à celui de l'invention décrit ci-avant mais en ajustant les paramètres de réalisation de sorte que certaines pièces soient obtenues avec des rugosités moyennes conformes à l'invention et d'autres avec des rugosités supérieures.

Les zones d'étanchéités statiques sont ensuite testées par application d'un flux d'azote à 100 bar entre les deux zones d'étanchéité et immersion dans un bain d'huile pour déterminer visuellement si l'azote parvient ou non à traverser la zone d'étanchéité statique.

Les zones d'étanchéités sont jugées conformes si après 6 minutes, aucune bulle, ou seulement quelques bulles de petit diamètre sont observées (noté OK dans le tableau ci-après).

Si quelques chemins de bulles d'un diamètre important, ou de nombreux chemins de grosses bulles sont observé, les zones d'étanchéités sont jugées non satisfaisantes (noté NOK dans le tableau ci-après).

Le test est réalisé pour plusieurs surfaces préparées par un procédé similaire à celui de l'invention comprenant éventuellement une étape de finition par polissage mécanique.

**[Table 2]**

| Finition du Zinc nickel | Moyenne Ra (µm) | Test étanchéité azote 100 bars |
|---|---|---|
| Aucune | 3,3 | OK |
| | 4,7 | NOK |
| | 4,5 | NOK |
| Reprise mécanique | 3,3 | OK |
| | 3,5 | OK |
| | 2,6 | OK |

La table 2, illustre dans le cas de pièces modèles cylindriques que l'étanchéité n'est pas liée à la présence ou non d'une étape de finition, et démontre également que lorsque la rugosité dépasse une valeur limite, l'étanchéité n'est plus assurée.

Exemple 3 : Tests d'étanchéité sur des pièces réelles.

Des zones d'étanchéité statiques pour des pièces réelles d'atterrisseur sont réalisées par un procédé tel que décrit ci-dessus.

Les surfaces des pièces sont préparées au moyen d'un procédé électrolytique similaire à celui de l'invention décrit ci-avant mais en ajustant les paramètres de réalisation de sorte que certaines pièces soient obtenues avec des rugosités moyennes conformes à l'invention et d'autres avec des rugosités supérieures.

L'étanchéité est testée entre deux zones d'étanchéité statique, à l'instar de l'exemple 2.

L'étanchéité aux gaz des zones d'étanchéité statique est testée en soumettant l'espace entre deux zones d'étanchéité statique à une pression d'azote de 100 bars pendant 10 à 12 minutes dans un bain d'huile. Si au plus deux lignes de bulles sont détectées, la pièce est jugée étanche (notée OK dans le tableau ci-après), et non-étanche si plus de bulles sont détectées.

L'étanchéité statique aux fluides est également testée par un procédé similaire à celui décrit dans l'exemple deux, mais à une pression de 172 bars pendant 2 minutes puis 97 bars pendant 12 heures. Si aucune fuite n'est détectée, la pièce est jugée étanche (notée OK dans le tableau ci-après), et non-étanche dans le cas contraire.

Les résultats sont présentés dans le tableau ci-dessous pour différents échantillons.

**[Table 3]**

| Finition du Zinc nickel | Moyenne Ra (µm) | Test étanchéité azote 100 bars 10 min | Test étanchéité hydraulique 172 bars 2 min + 97 bars 12 h |
|---|---|---|---|
| Aucune | 0,9 | OK | OK |
| Aucune | 1,1 | OK | OK |
| Aucune | 1,7 | NOK | -- |
| Reprise mécanique | 0,8 | OK | OK |
| Reprise mécanique | 1,0 | OK | OK |
| Reprise mécanique | 0,8 | OK | OK |

La table 3 illustre un comportement similaire à celui des pièces témoins des exemples 1 et 2, à savoir que l'étanchéité ou non d'une pièce n'est pas fonction d'un traitement de finition ou non. Il est par ailleurs observé que lorsque la rugosité moyenne de surface dépasse 1,6 µm, l'étanchéité n'est plus assurée, tandis que tant que la rugosité de surface reste inférieure à 1,6 µm, les zones d'étanchéité statique sont satisfaisantes.

### Exemple 4

Des zones d'étanchéité statiques sont préparées sur des tiges d'atterrisseur cylindriques revêtues d'un revêtement au nickel et au zinc.

Les surfaces des pièces sont préparées au moyen d'un procédé électrolytique similaire à celui de l'invention décrit ci-avant mais en ajustant les paramètres de réalisation de sorte que certaines pièces soient obtenues avec des rugosités moyennes conformes à l'invention et d'autres avec des rugosités supérieures. L'étanchéité est testée entre deux zones d'étanchéité statique, à l'instar de l'exemple 2.

L'étanchéité statique aux fluides est testée par un procédé similaire à celui décrit dans l'exemple 2, mais avec une pression de 5, 12 ou 150 bars. Si aucune fuite n'est détectée, la pièce est jugée étanche (notée OK dans le tableau ci-après), et non-étanche dans le cas contraire (notée NOK).

**[Table 4]**

| Finition du Zinc nickel | Moyenne Ra (µm) | Test étanchéité hydraulique 5 bars | Test étanchéité hydraulique 12 bars | Test étanchéité hydraulique 150 bars |
|---|---|---|---|---|
| Aucune | 0,3 | OK | OK | OK |
| Aucune | 0,5 | OK | OK | OK |
| Aucune | 2,0 | OK | OK | OK |

Les exemples décrits dans la table 4 montrent que l'étanchéité hydraulique est satisfaisante pour des pièces réelles d'atterrisseur même lorsque la rugosité moyenne est légèrement supérieure.

Les exemples ci-avant démontrent bien que les pièces conformes à l'objet de l'invention présentent des caractéristiques d'étanchéité statiques supérieures à des pièces hors invention.

## Revendications

1. Atterrisseur (100) comprenant :
- une tige d'atterrisseur (21) s'étendant selon un axe principal ;
- au moins un essieu (12) relié mécaniquement à la tige d'atterrisseur ;
- au moins une roue (11) montée pour pouvoir être mise en rotation autour dudit essieu ;
- au moins un amortisseur disposé pour amortir un mouvement de coulissement de ladite tige par rapport à une structure de l'aéronef,
l'atterrisseur comprenant en outre au moins un point d'étanchéité statique (40), le point d'étanchéité statique comprenant un joint en matériau élastiquement déformable maintenu entre une portion d'une première pièce de l'atterrisseur et une portion d'une deuxième pièce de l'atterrisseur, les premières et deuxièmes pièces de l'atterrisseur comprenant un substrat en acier revêtu par un revêtement ,
l'atterrisseur étant **caractérisé en ce que** le revêtement, au point d'étanchéité statique, est un revêtement en alliage de zinc et de nickel, comportant en pourcentage massique de l'alliage entre 12 % et 18 % et nickel, au plus 0,5 % d'autres éléments que le nickel et le zinc, le reste étant du zinc, et la rugosité Ra de la surface des portions des première et deuxième pièce de l'atterrisseur est inférieure ou égale à 1,6 µm.

2. Atterrisseur (100) selon la revendication 1, dans lequel le revêtement en alliage de zinc et de nickel a une épaisseur comprise entre 10 et 30 µm.

3. Atterrisseur (100) selon l'une quelconque des revendications 1 ou 2, dans lequel le joint en matériau élastiquement déformable est composé d'un ou plusieurs matériaux choisis parmi : le poybutadiène, le polyéthylène chloré, le chloroprène, le polyéthlène chlorosufloné, les fluorocabones, les fluorosilicones, les nitriles hydrogénées, les polyacrylates, les perfluoroélastomères, les polyacrylates, les polyuréthane, le silicone et ses dérivés, ou encore parmi les copolymères nitrile-butadiène, éthylène-propylène, éthylène-acrylate, d'isobutylène et d'isoprène, styrène-butadiène, de tétrafluoroéthylène et de propylène.

4. Atterrisseur (100) selon l'une quelconque des revendications 1 à 3, dans lequel une au moins des surfaces des première et deuxième pièces comprend une couche organo-minérale sur le revêtement en alliage de zinc et de nickel et au contact de ce dernier.

5. Atterrisseur (100) selon l'une quelconque des revendications 1 à 4, dans lequel le substrat en acier des première et deuxième pièces est choisie parmi les aciers suivants : 35NCD16, 35CD4, 35NC6, S99, S154, 25CD4S, Z8CND17-04, Z6CNU17-04, Z15CN17-03, S143, S144, S145, Z2CN18-10, Z2CN18-10/Z3CN18-10, Z10CNT18-10, Z12CNT18-10, XES, XC18S, 17-4PH, X2CrNi 18-9, 304L, Z6CNT18, 17-7PH, DC04 ou C22E/R.

## Patentansprüche

1. Fahrwerk (100), umfassend:
- eine Fahrwerkstrebe (21), die sich gemäß einer Hauptachse erstreckt;
- mindestens eine Achse (12), die mechanisch mit der Fahrwerkstrebe verbunden ist;
- mindestens ein Rad (11), das so montiert ist, dass es um die Achse in Drehung versetzt werden kann,
mindestens einen Stoßdämpfer, der angeordnet ist, um eine Gleitbewegung der Strebe mit Bezug auf eine Struktur des Flugzeugs zu dämpfen, wobei das Fahrwerk außerdem mindestens einen statischen Versiegelungspunkt (40) umfasst, wobei der statische Versiegelungspunkt eine Dichtung aus elastisch verformbarem Material umfasst, die zwischen einem Abschnitt eines ersten Stücks des Fahrwerks und einem Abschnitt eines zweiten Stücks des Fahrwerks gehalten wird, wobei das erste und das zweite Stück des Fahrwerks ein Substrat aus durch eine Verkleidung beschichtetem Stahl umfassen, wobei das Fahrwerk **dadurch gekennzeichnet ist, dass** die Verkleidung an dem statischen Versiegelungspunkt eine Verkleidung aus Zink- und Nickellegierung ist, umfassend einen Massenprozentsatz der Legierung zwischen 12 % und 18 % Nickel, höchstens 0,5 % anderen Elementen als Nickel und Zink, wobei der Rest Zink ist und die Rauigkeit Ra der Oberfläche der Abschnitte des ersten und des zweiten Stücks des Fahrwerks kleiner als oder gleich wie 1,6 µm ist.

2. Fahrwerk (100) nach Anspruch 1, wobei die Verkleidung aus Zink- und Nickellegierung eine Dicke im Bereich zwischen 10 und 30 µm aufweist.

3. Fahrwerk (100) nach einem der Ansprüche 1 oder 2, wobei die Dichtung aus elastisch verformbarem Material aus einem oder aus mehreren Materialien zusammengesetzt ist, ausgewählt aus: Polybutadien, chloriertem Polyethylen, Chloropren, chlorsulfoniertem Polyethylen, Fluorkohlenstoffen, Fluorosilikonen, hydrierten Nitrilen, Polyacrylaten, Perfluorelastomeren, Polyacrylaten, Polyurethanen, Silikon und seinen Derivaten, oder auch ausgewählt aus den Copolymeren Nitrilbutadien, Ethylenpropylen, Ethylenacrylat, Isobutylen und Isopren, Styrolbutadien, Tetrafluorethylen und Propylen.

4. Fahrwerk (100) nach einem der Ansprüche 1 bis 3, wobei mindestens eine der Oberflächen des ersten und des zweiten Stücks eine organisch-mineralische Schicht auf der Verkleidung aus Zink- und Nickellegierung und in Kontakt mit dieser Letzteren umfasst.

5. Fahrwerk (100) nach einem der Ansprüche 1 bis 4, wobei das Substrat aus Stahl des ersten und des zweiten Stücks ausgewählt ist aus den Folgenden Stahlsorten: 35NCD16, 35CD4, 35NC6, S99, S154, 25CD4S, Z8CND17-04, Z6CNU17-04, Z15CN17-03, S143, S144, S145, Z2CN18-10, Z2CN18-10/Z3CN18-10, Z10CNT18-10, Z12CNT18-10, XES, XC18S, 17-4PH, X2CrNi 18-9, 304L, Z6CNT18, 17-7PH, DC04 oder C22E/R.

## Claims

1. A landing gear (100) comprising:
- a landing gear rod (21) extending along a main axis;
- at least one axle (12) mechanically connected to the landing gear rod;
- at least one wheel (11) mounted to be able to be rotated around said axle;
- at least one damper disposed to damp a sliding movement of said rod relative to a structure of the aircraft,
the landing gear further comprising at least one static sealing point (40), the static sealing point comprising a gasket made of elastically deformable material held between a portion of a first part of the landing gear and a portion of a second part of the landing gear, the first and second parts of the landing gear comprising a steel substrate coated with a coating,
the landing gear being **characterized in that** the coating at the static sealing point is a zinc and nickel alloy coating including in mass percentage of the alloy between 12% and 18% and nickel, at most 0.5% of elements other than nickel and zinc, the balance being zinc, and the roughness Ra of the surface of the portions of the first and second parts of the landing gear is less than or equal to 1.6 µm.

2. The landing gear (100) according to claim 1, wherein the zinc and nickel alloy coating has a thickness comprised between 10 and 30 µm.

3. The landing gear (100) according to any one of claims 1 or 2, wherein the gasket made of elastically deformable material is composed of one or more materials selected from: polybutadiene, chlorinated polyethylene, chloroprene, polyethylene chlorosuflon, fluorocarbons, fluorosilicones, hydrogenated nitriles, polyacrylates, perfluoroelastomers, polyacrylates, polyurethanes, silicone and its derivatives, or else from nitrile-butadiene, ethylene-propylene, ethylene-acrylate, isobutylene copolymers and isoprene, styrene-butadiene, tetrafluoroethylene and propylene.

4. The landing gear (100) according to any one of claims 1 to 3, wherein at least one of the surfaces of the first and second parts comprises an organo-mineral layer on the zinc and nickel alloy coating and in contact with the latter.

5. The landing gear (100) according to any one of claims 1 to 4, wherein the steel substrate of the first and second parts is selected from the following steels:
35NCD16, 35CD4, 35NC6, S99, S154, 25CD4S, Z8CND17-04, Z6CNU17-04, Z15CN17-03, S143, S144, S145, Z2CN18-10, Z2CN18-10/Z3CN18-10, Z10CNT18-10, Z12CNT18-10, XES, XC18S, 17-4PH, X2CrNi 18-9, 304L, Z6CNT18, 17-7PH, DC04 or C22E/R.
